(19) Europäisches Patentamt / European Patent Office / Office européen des brevets

(11) **EP 2 519 048 A1**

(12) **EUROPEAN PATENT APPLICATION**
published in accordance with Art. 153(4) EPC

(43) Date of publication:
**31.10.2012 Bulletin 2012/44**

(51) Int Cl.:
**H04W 24/04** (2009.01)    **H04W 88/08** (2009.01)

(21) Application number: **10839479.2**

(22) Date of filing: **22.12.2010**

(86) International application number:
**PCT/JP2010/073188**

(87) International publication number:
**WO 2011/078249 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2009 JP 2009296336**

(71) Applicant: **NTT DoCoMo, Inc.**
**Tokyo 100-6150 (JP)**

(72) Inventors:
• **YAMATO, Masahiro**
**Tokyo 100-6150 (JP)**

• **SHIMAZU, Yoshitsugu**
**Tokyo 100-6150 (JP)**
• **SHIMADA, Shizuko**
**Tokyo 100-6150 (JP)**
• **MOTEGI, Masayuki**
**Tokyo 100-6150 (JP)**
• **WATANABE, Takayuki**
**Tokyo 100-6150 (JP)**

(74) Representative: **HOFFMANN EITLE**
**Patent- und Rechtsanwälte**
**Arabellastrasse 4**
**81925 München (DE)**

(54) **RADIO BASE STATION SYSTEM, RADIO BASE STATION CONTROL APPARATUS, NUMBER-OF-ACCOMMODATED-CELLS DECIDING PROGRAM AND NUMBER-OF-ACCOMMODATED-CELLS DECIDING METHOD**

(57)    A radio base station system 100 is capable of setting a cell C1 having a first bandwidth (20MHz for example) and a cell C3 having a second bandwidth (10MHz for example). The radio base station system 100A (100B) includes a plurality of types of BB cards having different combinations of the number of the cells which are acceptable. The radio base station system 100A (100B) determines whether or not cells are acceptable in the BB card based on a ratio between the first-cell-acceptable-number in a case of assigning only the 20MHz cell to the BB card and the second-cell-acceptable-number in a case of assigning only the 10MHz cell to the BB card.

FIG. 1

EP 2 519 048 A1

**Description**

**TECHNICAL FIELD**

The present invention relates to a radio base station system capable of at least setting a first cell having a first bandwidth and a second cell having a second bandwidth which is a bandwidth different from the first bandwidth, a radio base station controller connected to the radio base station system, and an accepted-cell-number determination program and an accepted-cell-number determination method which are used in the radio base station system.

**BACKGROUND ART**

In recent years, a mobile communication system capable of setting multiple cells of different bandwidths has been proposed. For example, six bandwidths ($BW_{channel}$) from 1.4 MHz up to 20 MHz can be set in Long Term Evolution (LTE) defined in 3GPP (see Non-patent Document 1, for example).

Meanwhile, in recent years, as standards such as Common Public Radio Interface (CPRI) are becoming full-fledged, multi-vendoring has been increasingly advanced in a radio base station system. Thus, it is becoming general to configure a single radio base station system by combining products made by multiple vendors. For example, while a radio base station system implements multiple BB cards by which baseband signal processing is executed, the radio base station system can implement BB cards (processing cards) manufactured by different vendors.

PRIOR ART DOCUMENT

NON-PATENT DOCUMENT

NON-PATENT DOCUMENT 1: 3GPP TS 36.104 V.8.5.0, Technical Specification Group Radio Access Network Evolved Universal Terrestrial Radio Access (E-UTRA) Base Station (BS) radio transmission and reception (Release 8) Section 5.5 Operating bands, 3GPP, March 2009

**SUMMARY OF THE INVENTION**

The aforementioned radio base station system, however, has the following problem. Specifically, the BB cards manufactured by the different vendors have processing capacities different from each other, and thus have different combinations of the number of cells which can be accepted in the BB card and a bandwidth of the cells.

In other words, in the LTE and the like allowing the multiple bandwidths to be set, each BB card has a large number of combinations of a bandwidth and the number of cells which can be accepted in the BB card, and moreover, the combinations may be different depending on the vendors of the BB cards. Thus, a huge number of combinations exist. In addition, even if the vendors are the same, processing capacity of the BB card might vary, depending on the version thereof. In this case, the number of the combinations further increases.

Thus, in a case where processing is taken over to a BB card made by a different vendor at a failure or the like of the BB card and where the radio base station system makes an effort to quickly select appropriate combinations in which as many already set combinations of cells as possible can be kept, from among the huge number of combinations, the effort requires a certain time period for searching and the like for the combinations, and thus is not practical.

Hence, an object of the present invention is to provide a radio base station system, a radio base station controller, an accepted-cell-number determination program, and an accepted-cell-number determination method which are used in a mobile communication system capable of multiple cells of different bandwidths and by which appropriate combinations of a bandwidth and the number of cells can be selected quickly when multiple processing cards having different processing capacities exist.

The present invention has the following features to solve the problems described above. The first feature of the present invention is summarized in that a radio base station system being capable of at least setting a first cell (cell C1) having a first bandwidth (20MHz for example) and a second cell (cell C3) having a second bandwidth (10MHz for example) which is a different bandwidth from the first bandwidth, and including a plurality of types of processing cards (BB cards 101A through BB card 101D) having different combinations of the number of the first cells and the number of the second cells which are acceptable therein, the radio base station system including: a card information acquisition unit (BB-card information acquisition unit 105) configured to acquire a first-cell-acceptable-number (2 cell) and a second-cell-acceptable-number (3 cell) for each type of the processing cards, the first-cell-acceptable-number being acceptable in a case of accepting only the first cell in one of the processing cards, the second-cell-acceptable-number being acceptable in a case of accepting only the second cell in the processing card; a request acquisition unit (cell-acceptance-request acquisition unit 107) configured to acquire a first-cell-requested number (1 cell for example) indicating the number of the first cells to be accepted in a certain processing card (BB card 101A for example) and a second-cell-requested number (1 cell for example) indicating the number of the second cells to be accepted in the certain processing card; a resource computation unit (resource computation unit 109) configured to compute a converted resource amount (1.5 cell) equivalent to a used resource amount of the certain processing card in a case of assigning only the second cell to the certain processing card, based on a ratio (3cell/2cell) between the first-cell-acceptable-number and the second-cell-acceptable-number; and a determination unit (determination unit 111) configured to determine whether or not the second-cell-requested number of the second cells are acceptable in view of a remaining resource amount obtained by subtracting a product of the converted resource amount and the first-cell-requested number from the second-cell-acceptable-number.

The second feature is according to the first feature and is summarized in that when the determination unit determines that the first cell and the second cell which are accepted in the certain processing card are not allowed to be kept in a different processing card after the certain processing card is changed to the different processing card, the resource computation unit reduces at least any one of the bandwidths of the first cell and the second cell and computes the converted resource amount.

The third feature of the present invention is according to the first feature is summarized in that the card information acquisition unit acquires a first-cell-under-limitation number indicating the number of the first cells acceptable in a case of limiting a processing capacity required for the processing card and a second-cell-under-limitation number indicating the number of the second cells acceptable in the case of limiting the processing capacity, and the resource computation unit computes the converted resource amount based on a ratio between the first-cell-under-limitation number and the second-cell-under-limitation number.

The fourth feature of the present invention is summarized in that a radio base station controller connected to a radio base station system capable of at least setting a first cell of a first bandwidth and a second cell of a second bandwidth which is a different bandwidth from the first bandwidth, wherein the radio base station system includes a plurality of types of processing cards having different combinations of the number of the first cells and the number of the second cells which are acceptable therein, and the radio base station system includes: a card information acquisition unit configured to acquire a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card; a request acquisition unit configured to acquire a first-cell-requested number indicating the number of the first cells to be accepted in a certain processing card and a second-cell-requested number indicating the number of the second cells to be accepted in the certain processing card; a resource computation unit configured to compute a converted resource amount equivalent to a used resource amount of the certain processing card in a case of assigning only the second cell to the certain processing card, based on a ratio between the first-cell-acceptable-number and the second-cell-acceptable-number; a determination unit configured to determine whether or not the second-cell-requested number of the second cells are acceptable in view of a remaining resource amount obtained by subtracting a product of the converted resource amount and the first-cell-requested number from the second-cell-acceptable-number; and a notification unit configured to notify the radio base station system of the number of the first cells and the number of the second cells to be accepted in the certain processing card, based on a result of the determination by the determination unit.

The fifth feature of the present invention is summarized in that an accepted-cell-number determination program used in a radio base station system capable of at least setting a first cell of a first bandwidth and a second cell of a second bandwidth which is a different bandwidth from the first bandwidth, wherein the radio base station system includes a plurality of types of processing cards having different combinations of the number of the first cells and the number of the second cells which are acceptable therein, and the accepted-cell-number determination program causes a computer to execute: card information acquisition processing of acquiring a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card; request acquisition processing of acquiring a first-cell-requested number indicating the number of the first cells to be accepted in a certain processing card and a second-cell-requested number indicating the number of the second cells to be accepted in the certain processing card; resource computation processing of computing a converted resource amount equivalent to a used resource amount of the certain processing card in a case of assigning only the second cell to the certain processing card, based on a ratio between the first-cell-acceptable-number and the second-cell-acceptable-number; and determination processing of determining whether or not the second-cell-requested number of the second cells are acceptable in view of a remaining resource amount obtained by subtracting a product of the converted resource amount and the first-cell-requested number from the second-cell-acceptable-number.

The sixth feature of the present invention is summarized in that an accepted-cell-number determination method used in a radio base station system capable of at least setting a first cell of a first bandwidth and a second cell of a second bandwidth which is a different bandwidth from the first bandwidth, wherein the radio base station system includes a plurality of types of processing cards having different combinations of the number of the first cells and the number of the second cells which are acceptable therein, and the accepted-cell-number determination method includes the steps of: acquiring a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card; acquiring a first-cell-requested number indicating the number of the first cells to be accepted in a certain processing card and a second-cell-requested number indicating the number of the second cells to be accepted in the certain processing card; computing a converted resource amount equivalent to a used resource amount of the certain processing card in a case of assigning only the second cell to the certain processing card, based on a ratio between the first-cell-acceptable-number and the second-cell-acceptable-number; and determining whether or not the second-cell-requested number of the second cells are acceptable in view of a remaining resource amount obtained by subtracting a product of the converted resource amount and the first-cell-requested number from the second-cell-acceptable-number.

## BRIEF DESCRIPTION OF THE DRAWINGS

[Fig. 1] Fig. 1 is an overall schematic configuration diagram of a mobile communication system 1 according to an embodiment of the present invention.
[Fig. 2] Fig. 2 is a functional block diagram of a radio base station 100A according to the embodiment of the present invention.
[Fig. 3] Fig. 3 is a chart showing a flow of initial cell-setting processing by the radio base station 100A according to the embodiment of the present invention.
[Fig. 4] Fig. 4 is a chart showing a flow of additional cell-setting processing by the radio base station 100A according to the embodiment of the present invention.
[Fig. 5] Fig. 5 is a diagram showing information examples, of BB cards, acquired by a BB-card-information acquisition unit 105 according to the embodiment of the present invention.
[Fig. 6] Fig. 6 is a graph showing used resource amounts, of a BB card, used by cells of respective bandwidths.
[Fig. 7] Fig. 7 is explanatory diagrams for explaining states of cells of particular bandwidths (20 MHz and 10 MHz) accepted in BB cards.
[Fig. 8] Fig. 8 is a functional block configuration diagram of an operation system 20 according to a modification of the present invention.

## MODE FOR CARRYING OUT THE INVENTION

Next, a description is given of an embodiment of the present invention. Specifically, the description is given of (1) Overall Schematic Configuration of Mobile Communication System, (2) Functional Block Configuration of Radio Base Station, (3) Operation of Radio Base Station, (4) Advantageous Effects, and (5) Other Embodiment.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

(1) Overall Schematic Configuration of Mobile Communication System

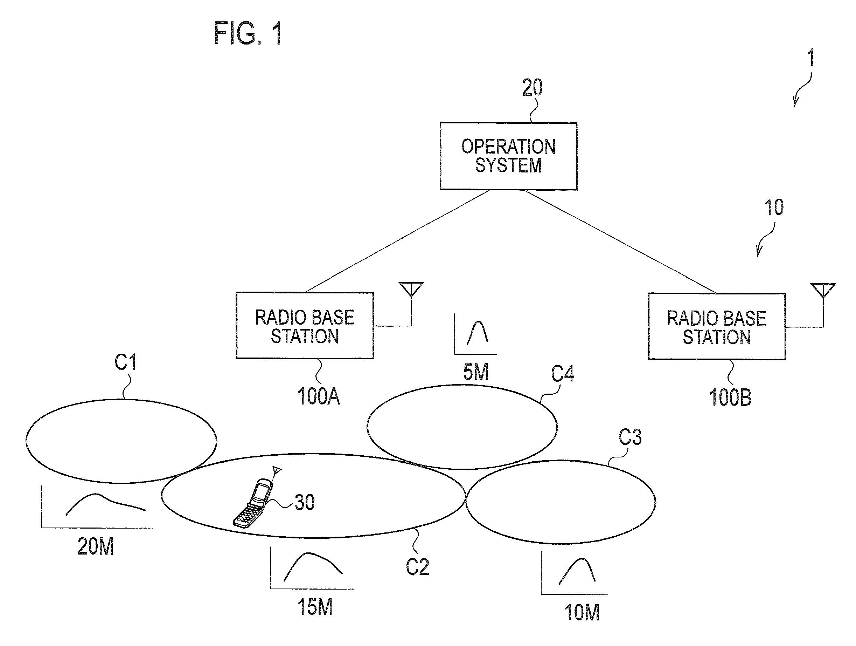

Fig. 1 is an overall schematic configuration diagram of a mobile communication system 1 according to this embodiment. As shown in Fig. 1, the mobile communication system 1 includes an operation system 20, a mobile station 30, and a radio base station system 10. The mobile communication system 1 is a system in compliance with Long Term Evolution (LTE) defined in 3GPP.

The radio base station system 10 includes a radio base station 100A and a radio base station 100B. The radio base station system 10 may include an interface in compliance with Common Public Radio Interface (CPRI) and be configured of a part of a radio equipment (RE) and a part of radio equipment controller (REC).

The operation system 20 is connected to the radio base station 100A and the radio base station 100B. The operation system 20 executes monitoring and controlling the radio base station 100A and the radio base station 100B.

The radio base station 100A and the radio base station 100B forming the radio base station system 10 execute radio communications with the mobile station 30. Each of the radio base station 100A and the radio base station 100B is capable of setting multiple cells of different bandwidths. In this embodiment, each of the radio base station 100A and the radio base station 100B is capable of setting a cell C1, a cell C2, a cell C3, and a cell C4 of bandwidths ($BW_{channel}$)

of 5 MHz, 10 MHz, 15 MHz, and 20 MHz. As shown in Fig. 1, for example, the cell C1 has a bandwidth of 20 MHz, and the cell C3 has a bandwidth of 10 MHz.

In sum, each of the radio base station 100A and the radio base station 100B is capable of at least setting, for example, the cell C1 (a first cell) and the cell C3 (a second cell) respectively of bandwidths of 20 MHz (a first bandwidth) and 10 MHz (a second bandwidth) different from 20 MHz.

(2) Functional Block Configuration of Radio Base Station

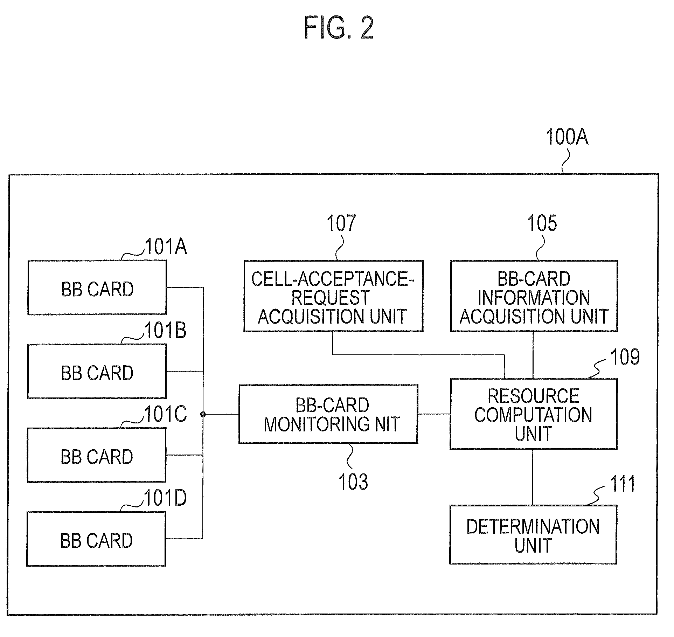

Fig. 2 is a functional block configuration diagram of the radio base station 100A. As shown in Fig. 2, the radio base station 100A includes a BB card 101A, a BB card 101B, a BB card 101C, and a BB card 101D, a BB-card monitoring unit 103, a BB-card information acquisition unit 105, a cell-acceptance-request acquisition unit 107, a resource computation unit 109, and a determination unit 111. Note that a description is mainly given below of portions related to the present invention. Thus, it should be noted that the radio base station 100A might include logical blocks (such as a radio communication unit and a power supply unit) indispensable to implement a function as the radio base station 100A, which are unillustrated or explanations of which are omitted. In addition, the radio base station 100B also includes the same functional block configuration as that of the radio base station 100A.

The BB card 101A to the BB card 101D each execute processing of a baseband signal. The baseband signal includes user data transmitted and received by the mobile station 30 and various control data. The BB card 101A to the BB card 101D each execute multiplexing to a baseband signal including user data and control data, processing of separating the data from the baseband signal, and the like.

In this embodiment, the radio base station 100A can implement multiple types of BB cards having different combinations of the numbers of acceptable cells (for example, the cell C1 and the cell C3). In other words, the radio base station 100A can implement BB cards manufactured by different vendors, and the BB cards manufactured by the different vendors have different processing capacities, respectively. In addition, even if the vendors are the same, the BB cards might have different processing capacities, depending on the versions thereof. In this embodiment, the BB card 101A to the BB card 101D form processing cards.

The BB-card monitoring unit 103 monitors states of the BB card 101A to the BB card 101D. Specifically, the BB-card monitoring unit 103 monitors whether or not the BB card 101A to the BB card 101D operate properly. The BB-card monitoring unit 103 also monitors whether or not processing is taken over to another BB card after a BB card has a failure. The BB-card monitoring unit 103 occasionally notifies the resource computation unit 109 of the monitored states.

The BB-card information acquisition unit 105 acquires information of each BB card. Specifically, the BB-card information acquisition unit 105 acquires information indicating an acceptable number of bandwidths, for each type (for example, for each vendor) of the BB cards implementable by the radio base station 100A. The BB-card information acquisition unit 105 can acquire the information, for example, from the operation system 20. Alternatively, the BB-card information acquisition unit 105 may acquire the information from other hardware (PF).

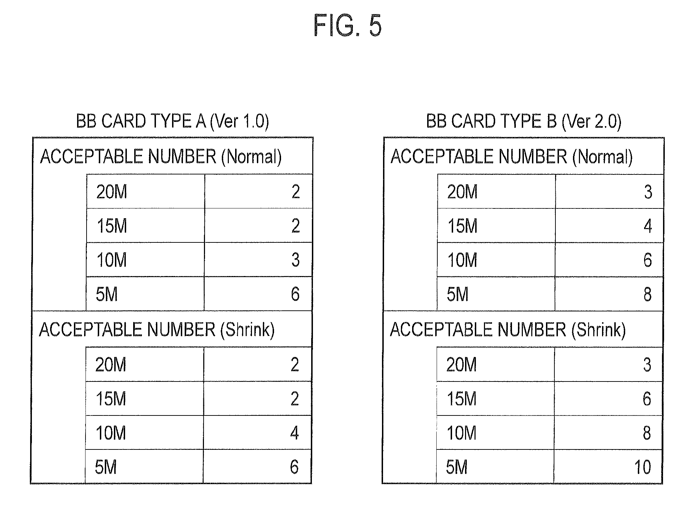

Fig. 5 shows examples of the BB-card information acquired by the BB-card information acquisition unit 105. As shown in Fig. 5, the information is configured of an acceptable number of cells in a case of accepting any one of only cells of one of the bandwidths (5 MHz, 10 MHz, 15 MHz, and 20 MHz). For example, in a BB card type A (ver 1.0), an acceptable number (a first acceptable number) in a case of accepting any one of only cells of 20 MHz is 2, and an acceptable number (a second acceptable number) in a case of accepting any one of only cells of 10 MHz is 3.

Herein, the BB card type A indicates that the BB card is manufactured by a vendor A, and a BB card type B indicates that the BB card is manufactured by a vendor A. In addition, Ver 1.0 and Ver 2.0 indicate versions of the BB cards. The acceptable number can also vary with the version.

Moreover, as shown in Fig. 5, the information includes the acceptable number in a case (Normal) of not limiting a processing capacity required for the BB card and acceptable number in a case (Shrink) of limiting the processing capacity. For example, in the BB card type A (Ver 1.0), the number of 20-MHz-cells (a first-cell-under-limitation number) acceptable in the case of limiting the processing capacity is 2 cells. Similarly, the number of 10-MHz-cells (a second-cell-under-limitation number) acceptable in the case of limiting the processing capacity is 4 cells. In sum, the BB card type A has a lowered processing capacity for the 10-MHz-cells due to the limitation of the processing capacity, but can accept more cells than in the case (Normal) of not limiting the processing capacity.

The cell-acceptance-request acquisition unit 107 acquires a cell acceptance request indicating the number of cells to be accepted in one of the BB card 101A to the BB card 101D. The cell-acceptance-request acquisition unit 107 can acquire the cell acceptance request, for example, from the operation system 20.

The cell-acceptance-request acquisition unit 107 acquires the number of cells (a first-cell-requested number), for example, of 20 MHz to be accepted in the BB card 101A (a certain processing card) and the number of cells (a second-cell-requested number) of a different bandwidth, for example, of 10 MHz to be accepted in the BB card 101A as well. Note that the cell-acceptance-request acquisition unit 107 may acquire, for each bandwidth, the number of cells to be accepted in the BB card 101A to the BB card 101D as a whole, assign the number of cells to each BB card according to the processing capacity of the BB card, and thereby determine whether the cells can be accepted in the BB card 101A to the BB card 101D.

The resource computation unit 109 computes a to-be-used resource of the one of the BB card 101A to the BB card 101D resulting from the acceptance of the cells by the one of the BB card 101A to the BB card 101D. As described above, the BB card 101A to the BB card 101D have different numbers of acceptable cells, depending on the combination of the bandwidth and the number of cells for the bandwidth. The resource computation unit 109 computes the to-be-used resource of the BB card based on the information on the acceptable number acquired by the BB-card information acquisition unit 105.

Specifically, based on a ratio between the acceptable number (the first acceptable number) in the case of accepting only cells (first cells) of a particular bandwidth (for example, 20 MHz) which are to be accepted and the acceptable number (the second acceptable number) in the case of accepting only cells (second cells) of a bandwidth (for example, 10 MHz) other than the particular bandwidth which are to be accepted, the resource computation unit 109 computes a "converted resource amount" equivalent to a used resource amount of a BB card (a certain processing card) in a case of assigning only the second cell to the BB card.

Meanwhile, the determination unit 111 determines whether or not cells based on the cell acceptance request acquired by the cell-acceptance-request acquisition unit 107 are acceptable, based on the converted resource amount computed by the resource computation unit 109.

In this embodiment, by using (Equation 1), the resource computation unit 109 and the determination unit 111 respectively perform computation of a remaining resource amount for cells of a particular bandwidth (xM) and determination of whether or not the cells can be accepted in the BB card.

[Formula 1]

Remaining resource amount for xM =

$$xM(N) - \frac{xM(N)}{5M(N)} \times 5M(AP) - \frac{xM(N)}{10M(N)} \times 10M(AP) - \frac{xM(N)}{15M(N)} \times 15M(AP) - \frac{xM(N)}{20M(N)} \times 20M(AP)$$

… (Equation 1)

In (Equation 1), 5M(N), 10M(N), 15M(N), and 20M (N) each represent the number of cells acceptable in a case of accepting only cells of a corresponding one of the bandwidths (5 MHz, 10 MHz, 15 MHz, and 20 MHz). In addition, 5M(AP), 10M(AP), 15M(AP), and 20M(AP) each represent the number of cells already accepted in (assigned to) the BB card. In (Equation 1), a fraction portion (for example, xM(N)/20M(N)) is a converted resource amount.

(Equation 1) is used to obtain the number of cells of a particular bandwidth which are acceptable in the BB card. For example, in a case where the acceptable numbers of the BB card are 20M(N) = 2, 15M(N) = 2, 10M(N) = 3, 5M(N) = 6, and where one cell of 20 MHz has been accepted, the resource computation unit 109 performs computation by using (Equation 1) as follows. [The number of cells acceptable in a BB card] a case of 20M(N) = 2, 15M(N) = 2, 10M (N) = 3, 5M(N) = 6

[Premise] One cell of a bandwidth of 20M has already been accepted.

[Requirement] To calculate the number of cells of a bandwidth of 10M which are acceptable using a remaining resource

[Formula 2]

Remaining resource amount for 10M =

$$10M(N) - \frac{10M(N)}{5M(N)} \times 5M(AP) - \frac{10M(N)}{10M(N)} \times 10M(AP) - \frac{10M(N)}{15M(N)} \times 15M(AP) - \frac{10M(N)}{20M(N)} \times 20M(AP)$$

Herein, a 20-MHz-cell is counted as the already accepted one cell, and accepting 10-MHz-cells in the BB card is requested. Note that the acceptable numbers of the BB card which are 20M (N) = 2, 15M (N) = 2, 10M(N) = 3, 5M(N) = 6 are acquired by the BB-card information acquisition unit 105 as described above (see Fig. 5) .

The resource computation unit 109 substitutes values for 5M(N), 10M(N), 15M(N), and 20M(N) into (Equation 1), substitutes a value of 1 for 20M(AP), and performs the computation as follows.

[Formula 3]

$$\text{Remaining resource amount for 10M} = 3 - \frac{3}{6} \times 0 - \frac{3}{3} \times 0 - \frac{3}{2} \times 0 - \frac{3}{2} \times 1$$

= 1.5 → 1 cell (truncated to an integer)

Note that the converted resource amount obtained by converting the 20-MHz-cell into the 10-MHz-cell is 1.5 (10M(N)/20M(N) = 3/2). The resource computation unit 109 calculates the "remaining resource amount for 10M" as 1.5. The resource computation unit 109 derives 1 (truncated to an integer) as the number of 10-MHz-cells acceptable in the BB card with the 20-MHz-cell counted as the one cell.

The determination unit 111 determines whether or not the number of 10-MHz-cells (the second-cell-requested number, for example, of 1) is acceptable in view of the remaining resource amount (3 - 1.5 = 1.5) obtained by subtracting a product (1.5*1) of the converted resource amount (1.5) and the number of 20-MHz-cells (the first-cell-requested number, for example, of 1) from the acceptable number (the second acceptable number of 10M(N) = 3) in the case of accepting only the 10-MHz-cells (the second cells).

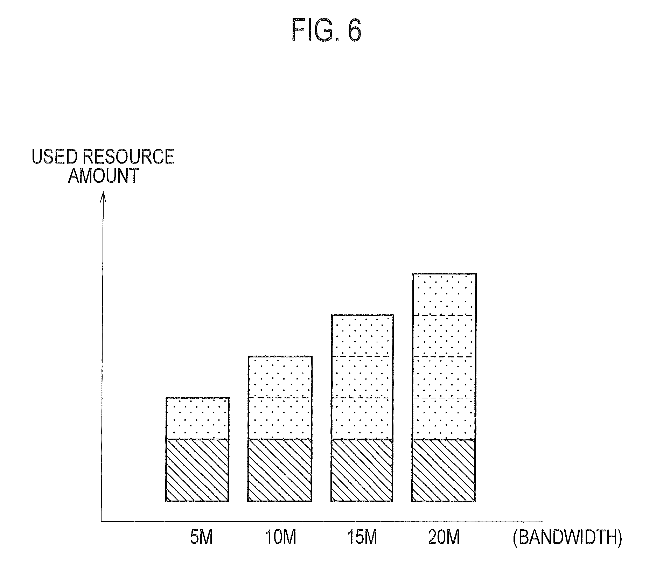

Here, a description is given of a reason why the resource computation unit 109 can determine the acceptable number of a particular bandwidth by using (Equation 1). Fig. 6 shows used resource amounts, of the BB card, used by the cells of the respective bandwidths. As shown in Fig. 6, whatever the bandwidth is, a fixed amount of resources (hatched portions in the graph) are used for common processing. Further, resources (dotted portions in the graph) according to the bandwidths are used.

Since the resources are used in this manner, a relationship between the bandwidth and the used resource is not proportional. For example, the used resource amount of the 10-MHz-cells is not twice the used resource amount of the 5-MHz-cells. Thus, there is a problem that combinations of the bandwidth and the number of cells which are acceptable in the BB card cannot be computed by using a simple proportion-based calculation. Meanwhile, a method can be conceived in which all of such combinations of the bandwidth and the number of cells are prepared in advance as a table or the like, and in which appropriate combinations according to a cell acceptance request are selected from the table, but is not practical in consideration of search time and update to the table.

In this embodiment, as a result of an elaborated study on the combinations of the bandwidth and the number of cells which are acceptable for each type of the BB cards, a method has been found in which a ratio between the acceptable numbers in the case of accepting only cells of each bandwidth is used, and in which the acceptable number having a particular bandwidth is thereby derived by using computation even if the relationship between the bandwidth and the used resource is not proportional. The resource computation unit 109 computes the to-be-used resource of the BB card in accordance with the method.

Also, in this embodiment, in a case where processing is taken over due to a failure or the like from a BB card (for example, the BB card 101A) to another BB card (for example, the BB card 101D) and where the determination unit 111 then determines that the BB card 101D cannot keep cells (for example, 20-MHz-cells and 10-MHz-cells) accepted in the BB card 101A, the resource computation unit 109 can also reduce at least one of the bandwidths of the 20-MHz-cells and the 10-Hz-cells and compute the aforementioned "converted resource amount."

Further, the resource computation unit 109 can calculate the aforementioned "converted resource amount" based on a ratio between acceptable numbers (Shrink) in the case of limiting the processing capacity of the BB card, for example, between the number of cells (the first-cell-under-limitation number) of 20 MHz acceptable in the case of limiting the processing capacity and the number of cells (the second-cell-under-limitation number) of 10 MHz acceptable in the case of limiting the processing capacity.

(3) Operation of Radio Base Station

Next, a description is given of a determination operation of the radio base station 100A as to whether or not cells can be accepted in a BB card. Specifically, the description is given of the determination operation of the radio base station 100A as to whether or not the cells can be accepted in the BB card through operations in (3.1) Initial Cell-Setting Processing and (3.2) Additional Cell-Setting Processing.

(3.1) Initial Cell-Setting Processing

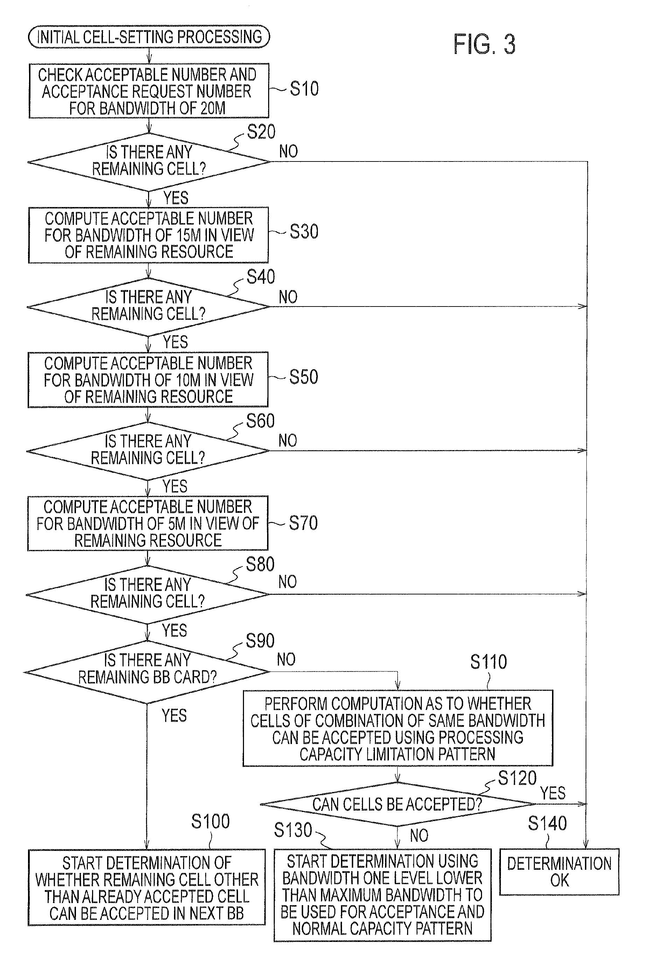

Fig. 3 shows a flow of initial cell-setting processing by the radio base station 100A. As shown in Fig. 3, in Step S10, the radio base station 100A checks the numbers of cells which can be accepted in a BB card and which are requested to be accepted therein, the cells having a bandwidth of 20 MHz. Specifically, the radio base station 100A checks the acceptable number based on the acquired information for each BB card type (see Fig. 5). The radio base station 100A also checks the acceptance-requested number for the BB card, based on a cell acceptance request indicating the number of cells to be accepted in one of the BB card 101A to the BB card 101D.

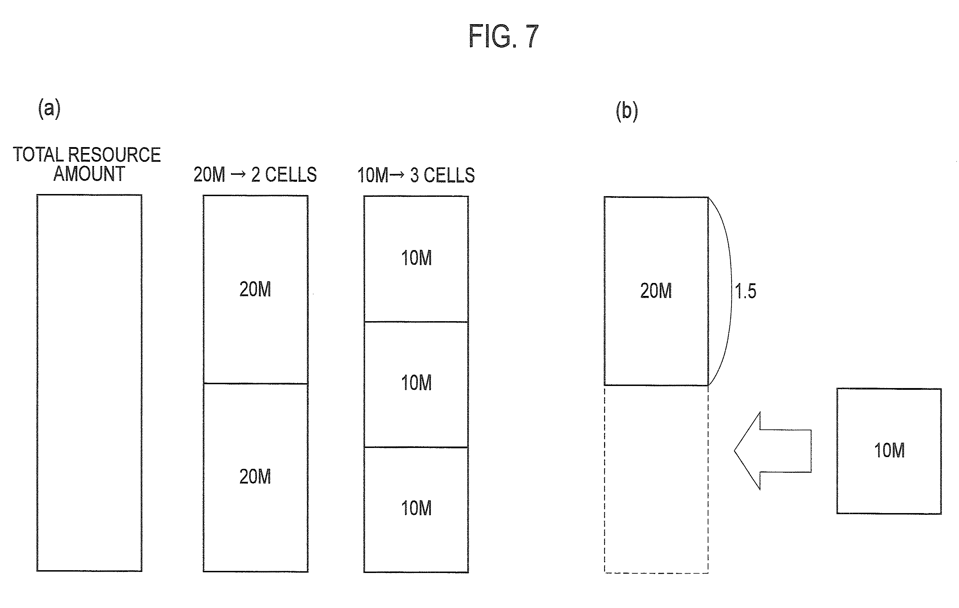

Parts (a) and (b) of Fig. 7 are explanatory diagrams for explaining states of cells of particular bandwidths (20 MHz and 10 MHz) accepted in BB cards. Part (a) of Fig. 7 shows a total resource amount of a BB card, the acceptable number (20M(N)) in the case of accepting only the 20-MHz-cells, and the acceptable number (10M(N)) in the case of accepting only the 10-MHz-cells. As shown in Part (a) of Fig. 7, 20M(N) is 2, and 10M (N) is 3. Herein, as shown in Part (b) of Fig. 7, the number of 20-MHz-cells requested to be accepted is 1, and one 20-MHz-cell has been assigned to the BB card.

In Step S20, the radio base station 100A determines whether or not there is any remaining cell to be accepted in the BB card.

If there is any remaining cell to be accepted in the BB card (YES in Step S20), in Step S30 the radio base station 100A computes the aforementioned converted resource amount (see (Equation 1)) for a 15-MHz-cell from among the remaining cells to be accepted in the BB card and determines whether or not the cell is acceptable in view of a remaining resource of the BB card. Herein, no request to accept a 15-MHz-cell exists, and processing moves to Step S40.

In Steps S40 and S50, the radio base station 100A repeats the same processing for a 10-MHz-cell. Herein, as shown in Part (b) of Fig. 7, the number of 10-MHz-cells requested to be accepted is 1, and one 10-MHz-cell is to be assigned to the BB card in addition to the one 20-MHz-cell. In this case, the 20-MHz-cell is converted into the 10-MHz-cell as described above, and thus the computation is performed so that the 20-MHz-cell is equivalent to 1.5. Accordingly, the radio base station 100A determines that one 10-MHz-cell can be accepted in the BB card (3 - 1.5 = 1.5).

In Steps S60 and S70, the radio base station 100A repeats the same processing for a 5-MHz-cell.

In Step S80, the radio base station 100A determines whether or not there is any remaining cell to be accepted.

If there is any remaining cell to be accepted (YES in Step S80), in Step S90 the radio base station 100A determines whether or not there is any remaining BB card, that is, a next BB card which can accept the cell.

If there is a next BB card (YES in Step S90), in Step S100 the radio base station 100A starts determination of whether or not the remaining cell other than the cell already accepted in the BB card can be accepted in the next BB card in accordance with the same flow as that described above.

If there is no next BB card (NO in Step S90), in Step S110 the radio base station 100A performs computation as to whether or not all the cells can be accepted in the first BB card in accordance with the same flow as that described above, by using a processing capacity limitation pattern, specifically, the pattern of "Shrink" shown in Fig. 5.

In Step S120, the radio base station 100A determines whether or not all the cells can be accepted in the first BB card by using the pattern of "Shrink."

If all the cells cannot be accepted in the first BB card (NO in Step S120), in Step S130 the radio base station 100A performs computation as to whether or not all the cells can be accepted in the first BB card in accordance with the same flow as that described above, by using a bandwidth which is one level lower than the maximum bandwidth to be used for the acceptance and a normal capacity pattern, specifically, the pattern of "Normal" shown in Fig. 5.

On the other hand, if all the cells can be accepted in the first BB card (YES in Step S120), in Step S140 the radio base station 100A considers that the determinations of acceptance of the cells in the BB card are completed (determination OK) and terminates the processing. Note that the radio base station 100A similarly terminates the processing in the cases of NO in Steps S20, S40, S60, and S80.

(3.2) Additional Cell-Setting Processing

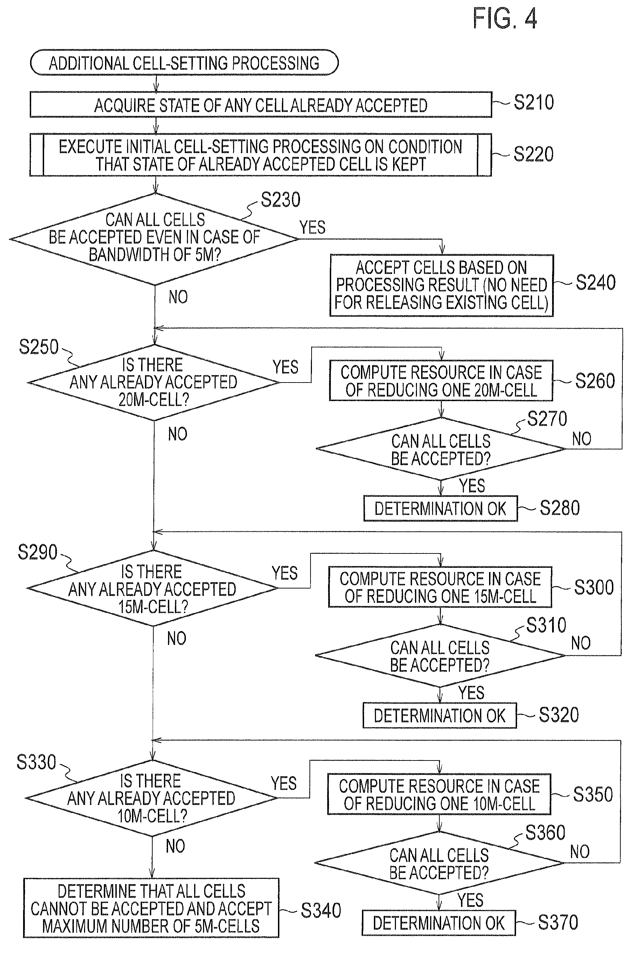

Fig. 4 shows a flow of additional cell-setting processing by the radio base station 100A. The flow of the additional cell-setting processing is used, when a cell is added to a BB card having already accepted any cell, or when a failure occurs in the BB card having accepted the cell and another BB card takes over the processing.

As shown in Fig. 4, in Step S210, the radio base station 100A acquires a state of any cell accepted in the BB card.

In Step S220, the radio base station 100A executes the aforementioned flow of the initial cell-setting processing on condition that the state of the accepted cell is kept. Specifically, the radio base station 100A executes processing in Steps S10 to S80. Herein, it is determined in the processing in Step S80 that there are remaining cells.

In Step S230, the radio base station 100A determines whether or not the cell can be accepted in view of a remaining resource of the BB card on the assumption that the remaining cells each have a bandwidth of 5 MHz.

If the cells can be accepted (YES in Step S230), in Step S240 the radio base station 100A accepts the cells in the BB card based on the processing result in Step S220. In other words, the radio base station 100A determines that the existing cell already accepted in the BB card does not need to be released although the bandwidth needs to be reduced.

If the cell cannot be accepted (NO in Step S230), in Step S250 the radio base station 100A determines whether or not there is any 20-MHz-cell having already been accepted.

If there is any 20-MHz-cell having already been accepted (YES in Step S250), the radio base station 100A computes a resource to be used in a case of reducing one 20-MHz-cell.

In Step S270, the radio base station 100A determines whether or not all the remaining cells can be accepted in the BB card.

If all the cells can be accepted in the BB card (YES in Step S270), in Step S280 the radio base station 100A considers that the determinations of acceptance of the cells by the BB card are completed (determination OK) and terminates the processing.

If all the cells cannot be accepted in the BB card (NO in Step S270), the radio base station 100A repeats the processing performed from Step S250.

In addition, in Steps S290 to S370, the radio base station 100A executes the same processing on cells of bandwidths of 15 MHz and 10 MHz to operate so that as many cells as possible can be accepted in the BB card. Note that if all the cells cannot be accepted in the BB card, in Step S340 the radio base station 100A accepts the maximum number of cells which are acceptable in the BB card, while setting the bandwidth of 5 MHz for the cells.

(4) Advantageous Effects

According to the radio base station system 10, based on the ratio (for example, 3 cells/2 cells) between the acceptable number (the first acceptable number) in the case of accepting only cells (first cells), for example, of 20 MHz and the acceptable number (the second acceptable number) in the case of accepting only cells, for example, of 10 MHz, the resource computation unit 109 can compute the converted resource amount (1.5 cells) equivalent to the used resource amount of a BB card in a case of assigning only the second cells to the BB card. In addition, the determination unit 111 determines whether or not the number of 10-MHz-cells (the second-cell-requested number) is acceptable in view of the remaining resource amount obtained by subtracting the product of the converted resource amount and the number of 20-MHz-cells (the first-cell-requested number) to be accepted in the BB card from the second acceptable number.

Thus, all the combinations of the bandwidth and the number of cells as a table or the like do not have to be prepared in advance for determining whether or not the cells can be accepted in the BB card. In sum, according to the radio base station system 10, whether or not the cells can be accepted can be determined by simple computation. Thus, when multiple BB cards of different processing capacities exist, appropriate combinations of the bandwidth and the number of cells can be selected quickly.

The reason why whether or not the cells can be accepted can be determined by such computation is that the fact has been found as described above in which the ratio between the acceptable numbers in the case of accepting only cells of each bandwidth is used, and in which the acceptable number having a particular bandwidth can thereby be derived by using the computation even if the relationship between the bandwidth and the used resource is not proportional.

In this embodiment, when all the cells cannot be accepted in a BB card, the radio base station system 10 operates so that as many cells as possible can be accepted in the BB card while reducing the bandwidth. The radio base station system 10 can determine the number of cells acceptable in the BB card based on the acceptable number not only in the case (Normal) of not limiting the processing capacity required for the BB card but also in the case (Shrink) of limiting the processing capacity.

For this reason, even when processing is taken over to a BB card having a lower processing capacity due to a failure of a BB card or when an additional cell to be newly accepted is requested, as many cells as possible can be kept.

(5) Other Embodiment

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

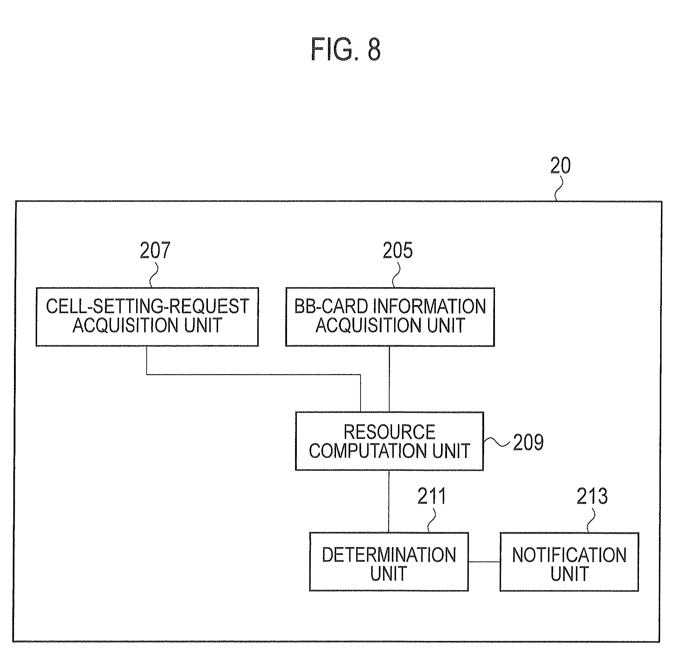

For example, in the aforementioned embodiment of the present invention, the radio base station 100A determines whether or not cells can be accepted in the BB card. However, the operation system 20 may execute the determination. Fig. 8 is a functional block diagram of the operation system 20 according to a modification of the present invention.

As shown in Fig. 8, the operation system 20 may include a BB-card information acquisition unit 205, a cell-setting-request acquisition unit 207, a resource computation unit 209, a determination unit 211, and a notification unit 213. The BB-card information acquisition unit 205 to the determination unit 211 respectively correspond to the BB-card information acquisition unit 105 to the determination unit 111 of the radio base station 100A.

The notification unit 213 notifies the radio base station 100A (100B) of the number of cells (the first cells and the second cells) to be accepted in one of the BB card 101A to the BB card 101D, based on a determination result by the determination unit 211.

Moreover, in the aforementioned embodiment, the bandwidths ($BW_{channel}$) of 5 MHz, 10 MHz, 15 MHz, and 20 MHz are used; however, the bandwidths are not limited to these. For example, 3 MHz or the like may be used. In addition, two bandwidths or more are only required to be used.

Note that functions of the resource computation unit 109 and the determination unit 111 of the radio base station 100A described above may be implemented by means of hardware, a software module executed by a processor, or a combination of both.

In the aforementioned embodiment, the description has been given by taking the BB card 101A to the BB card 101D as examples. However, the present invention is applicable to another card or a processing unit which does not have a proportional relationship between a bandwidth and a used resource.

For example, in the aforementioned embodiment of the present invention, the description has been given by taking LTE as an example; however, the scope to which the present invention is applicable is not limited to this system. For example, the present invention is applicable to a radio communication system, such as WiMAX, allowing multiple cells of respective bandwidths to be set.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2009-296336 (filed on December 25, 2009) is incorporated herein by reference.

## INDUSTRIAL APPLICABILITY

The present invention can provide a radio base station system, a radio base station controller, an accepted-cell-number determination program, and an accepted-cell-number determination method which are used in a mobile communication system capable of multiple cells of different bandwidths and by which appropriate combinations of a bandwidth and the number of cells can be selected quickly when multiple processing cards having different processing capacities exist.

## EXPLANATION OF THE REFERENCE NUMERALS

1 ... mobile communication system, 10 ... radio base station system, 20 ... operation system, 30 ... mobile station, 100A, 100B ... radio base station, 101A to 101D ... BB card, 103 ... BB-card monitoring unit, 105 ... BB-card information acquisition unit, 107 ... cell-acceptance-request acquisition unit, 109 ... resource computation unit, 111 ... determination unit, 205 ... BB-card information acquisition unit, 207 ... cell-setting-request acquisition unit, 209 ... resource computation unit, 211 ... determination unit, 213 ... notification unit, C1 to C4 ... cell

## Claims

1. A radio base station system being capable of at least setting a first cell having a first bandwidth and a second cell having a second bandwidth which is a different bandwidth from the first bandwidth, and including a plurality of types of processing cards having different combinations of the number of the first cells and the number of the second cells which are acceptable therein, the radio base station system comprising:

 a card information acquisition unit configured to acquire a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card;
 a request acquisition unit configured to acquire a first-cell-requested number indicating the number of the first cells to be accepted in a certain processing card and a second-cell-requested number indicating the number of the second cells to be accepted in the certain processing card;
 a resource computation unit configured to compute a converted resource amount equivalent to a used resource amount of the certain processing card in a case of assigning only the second cell to the certain processing card, based on a ratio between the first-cell-acceptable-number and the second-cell-acceptable-number; and
 a determination unit configured to determine whether or not the second-cell-requested number of the second cells are acceptable in view of a remaining resource amount obtained by subtracting a product of the converted resource amount and the first-cell-requested number from the second-cell-acceptable-number.

2. The radio base station system according to claim 1, wherein
when the determination unit determines that the first cell and the second cell which are accepted in the certain processing card are not allowed to be kept in a different processing card after the certain processing card is changed to the different processing card, the resource computation unit reduces at least any one of the bandwidths of the first cell and the second cell and computes the converted resource amount.

3. The radio base station system according to claim 1, wherein
the card information acquisition unit acquires a first-cell-under-limitation number indicating the number of the first cells acceptable in a case of limiting a processing capacity required for the processing card and a second-cell-under-limitation number indicating the number of the second cells acceptable in the case of limiting the processing capacity, and
the resource computation unit computes the converted resource amount based on a ratio between the first-cell-under-limitation number and the second-cell-under-limitation number.

4. A radio base station controller connected to a radio base station system capable of at least setting a first cell of a first bandwidth and a second cell of a second bandwidth which is a different bandwidth from the first bandwidth, wherein
the radio base station system includes a plurality of types of processing cards having different combinations of the number of the first cells and the number of the second cells which are acceptable therein, and
the radio base station system comprises:

a card information acquisition unit configured to acquire a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card;
a request acquisition unit configured to acquire a first-cell-requested number indicating the number of the first cells to be accepted in a certain processing card and a second-cell-requested number indicating the number of the second cells to be accepted in the certain processing card;
a resource computation unit configured to compute a converted resource amount equivalent to a used resource amount of the certain processing card in a case of assigning only the second cell to the certain processing card, based on a ratio between the first-cell-acceptable-number and the second-cell-acceptable-number;
a determination unit configured to determine whether or not the second-cell-requested number of the second cells are acceptable in view of a remaining resource amount obtained by subtracting a product of the converted resource amount and the first-cell-requested number from the second-cell-acceptable-number; and
a notification unit configured to notify the radio base station system of the number of the first cells and the number of the second cells to be accepted in the certain processing card, based on a result of the determination by the determination unit.

5. An accepted-cell-number determination program used in a radio base station system capable of at least setting a first cell of a first bandwidth and a second cell of a second bandwidth which is a different bandwidth from the first bandwidth, wherein
the radio base station system includes a plurality of types of processing cards having different combinations of the number of the first cells and the number of the second cells which are acceptable therein, and
the accepted-cell-number determination program causes a computer to execute:

card information acquisition processing of acquiring a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card;
request acquisition processing of acquiring a first-cell-requested number indicating the number of the first cells to be accepted in a certain processing card and a second-cell-requested number indicating the number of the second cells to be accepted in the certain processing card;
resource computation processing of computing a converted resource amount equivalent to a used resource amount of the certain processing card in a case of assigning only the second cell to the certain processing card, based on a ratio between the first-cell-acceptable-number and the second-cell-acceptable-number; and

determination processing of determining whether or not the second-cell-requested number of the second cells are acceptable in view of a remaining resource amount obtained by subtracting a product of the converted resource amount and the first-cell-requested number from the second-cell-acceptable-number.

6. An accepted-cell-number determination method used in a radio base station system capable of at least setting a first cell of a first bandwidth and a second cell of a second bandwidth which is a different bandwidth from the first bandwidth, wherein
the radio base station system includes a plurality of types of processing cards having different combinations of the number of the first cells and the number of the second cells which are acceptable therein, and
the accepted-cell-number determination method comprises the steps of:

acquiring a first-cell-acceptable-number and a second-cell-acceptable-number for each type of the processing cards, the first-cell-acceptable-number being acceptable in a case of accepting only the first cell in one of the processing cards, the second-cell-acceptable-number being acceptable in a case of accepting only the second cell in the processing card;
acquiring a first-cell-requested number indicating the number of the first cells to be accepted in a certain processing card and a second-cell-requested number indicating the number of the second cells to be accepted in the certain processing card;
computing a converted resource amount equivalent to a used resource amount of the certain processing card in a case of assigning only the second cell to the certain processing card, based on a ratio between the first-cell-acceptable-number and the second-cell-acceptable-number; and
determining whether or not the second-cell-requested number of the second cells are acceptable in view of a remaining resource amount obtained by subtracting a product of the converted resource amount and the first-cell-requested number from the second-cell-acceptable-number.

FIG. 1

# FIG. 2

100A

107

105

| CELL-ACCEPTANCE-REQUEST ACQUISITION UNIT | BB-CARD INFORMATION ACQUISITION UNIT |

101A

BB CARD

101B

BB CARD

101C

BB CARD

101D

BB CARD

BB-CARD MONITORING NIT

103

RESOURCE COMPUTATION UNIT

109

DETERMINATION UNIT

111

FIG. 3

INITIAL CELL-SETTING PROCESSING

CHECK ACCEPTABLE NUMBER AND ACCEPTANCE REQUEST NUMBER FOR BANDWIDTH OF 20M — S10

S20
IS THERE ANY REMAINING CELL? — NO

YES

COMPUTE ACCEPTABLE NUMBER FOR BANDWIDTH OF 15M IN VIEW OF REMAINING RESOURCE — S30

S40
IS THERE ANY REMAINING CELL? — NO

YES

COMPUTE ACCEPTABLE NUMBER FOR BANDWIDTH OF 10M IN VIEW OF REMAINING RESOURCE — S50

S60
IS THERE ANY REMAINING CELL? — NO

YES

COMPUTE ACCEPTABLE NUMBER FOR BANDWIDTH OF 5M IN VIEW OF REMAINING RESOURCE — S70

S80
IS THERE ANY REMAINING CELL? — NO

YES

S90
IS THERE ANY REMAINING BB CARD? — NO

S110
PERFORM COMPUTATION AS TO WHETHER CELLS OF COMBINATION OF SAME BANDWIDTH CAN BE ACCEPTED USING PROCESSING CAPACITY LIMITATION PATTERN

S120
CAN CELLS BE ACCEPTED? — YES

YES

S100
START DETERMINATION OF WHETHER REMAINING CELL OTHER THAN ALREADY ACCEPTED CELL CAN BE ACCEPTED IN NEXT BB

S130
NO
START DETERMINATION USING BANDWIDTH ONE LEVEL LOWER THAN MAXIMUM BANDWIDTH TO BE USED FOR ACCEPTANCE AND NORMAL CAPACITY PATTERN

S140
DETERMINATION OK

FIG. 4

( ADDITIONAL CELL-SETTING PROCESSING )

ACQUIRE STATE OF ANY CELL ALREADY ACCEPTED ~ S210

EXECUTE INITIAL CELL-SETTING PROCESSING ON CONDITION THAT STATE OF ALREADY ACCEPTED CELL IS KEPT ~ S220

S230 CAN ALL CELLS BE ACCEPTED EVEN IN CASE OF BANDWIDTH OF 5M? — YES → ACCEPT CELLS BASED ON PROCESSING RESULT (NO NEED FOR RELEASING EXISTING CELL) ~ S240

NO

S250 IS THERE ANY ALREADY ACCEPTED 20M-CELL? — YES → COMPUTE RESOURCE IN CASE OF REDUCING ONE 20M-CELL ~ S260

NO

S270 CAN ALL CELLS BE ACCEPTED? — NO

YES

DETERMINATION OK ~ S280

S290 IS THERE ANY ALREADY ACCEPTED 15M-CELL? — YES → COMPUTE RESOURCE IN CASE OF REDUCING ONE 15M-CELL ~ S300

NO

S310 CAN ALL CELLS BE ACCEPTED? — NO

YES

DETERMINATION OK ~ S320

S330 IS THERE ANY ALREADY ACCEPTED 10M-CELL? — YES → COMPUTE RESOURCE IN CASE OF REDUCING ONE 10M-CELL ~ S350

NO

S360 CAN ALL CELLS BE ACCEPTED? — NO

YES

DETERMINE THAT ALL CELLS CANNOT BE ACCEPTED AND ACCEPT MAXIMUM NUMBER OF 5M-CELLS ~ S340

DETERMINATION OK ~ S370

# FIG. 5

BB CARD TYPE A (Ver 1.0)

| ACCEPTABLE NUMBER (Normal) | |
|---|---|
| 20M | 2 |
| 15M | 2 |
| 10M | 3 |
| 5M | 6 |
| ACCEPTABLE NUMBER (Shrink) | |
| 20M | 2 |
| 15M | 2 |
| 10M | 4 |
| 5M | 6 |

BB CARD TYPE B (Ver 2.0)

| ACCEPTABLE NUMBER (Normal) | |
|---|---|
| 20M | 3 |
| 15M | 4 |
| 10M | 6 |
| 5M | 8 |
| ACCEPTABLE NUMBER (Shrink) | |
| 20M | 3 |
| 15M | 6 |
| 10M | 8 |
| 5M | 10 |

FIG. 6

# FIG. 7

(a)

(b)

TOTAL RESOURCE
AMOUNT

20M → 2 CELLS

10M → 3 CELLS

EP 2 519 048 A1

FIG. 8

20

207

CELL-SETTING-REQUEST
ACQUISITION UNIT

205

BB-CARD INFORMATION
ACQUISITION UNIT

RESOURCE
COMPUTATION UNIT

209

211

DETERMINATION
UNIT

213

NOTIFICATION
UNIT

| INTERNATIONAL SEARCH REPORT | | International application No. |
|---|---|---|
| | | PCT/JP2010/073188 |

**A. CLASSIFICATION OF SUBJECT MATTER**
*H04W24/04*(2009.01)i, *H04W88/08*(2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-038692 A (Fujitsu Ltd.), 19 February 2009 (19.02.2009), paragraphs [0002] to [0056] (Family: none) | 1-6 |
| A | JP 2004-088206 A (Hitachi Kokusai Electric Inc.), 18 March 2004 (18.03.2004), entire text (Family: none) | 1-6 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 February, 2011 (08.02.11) | 22 February, 2011 (22.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009296336 A

**Non-patent literature cited in the description**

- Technical Specification Group Radio Access Network Evolved Universal Terrestrial Radio Access (E-UTRA) Base Station (BS) radio transmission and reception (Release 8) Section 5.5 Operating bands. *3GPP TS 36.104 V.8.5.0,* March 2009